# EUROPÄISCHE PATENTSCHRIFT

(11) **EP 1 602 920 B1**
(45) Veröffentlichungstag und Bekanntmachung des Hinweises auf die Patenterteilung: **04.11.2009**
(21) Anmeldenummer: 05011889.2
(22) Anmeldetag: 02.06.2005
(51) Int. Cl.: G01N 21/84, G01N 21/64

(54) **Optisches Verfahren zur Identifizierung von Zinn- und Feuerseite bei Floatgläsern**
Optical method for identifying the tin side and air side of float glass
Procédé optique pour identifier la face étain et la face feu d'une feuille de verre plat

(30) Priorität: 04.06.2004 DE 102004027411
(43) Veröffentlichungstag der Anmeldung: 07.12.2005
(73) Patentinhaber: boraident GmbH, 06118 Halle/Saale (DE)
(72) Erfinder: Rainer, Thomas, 38855 Wernigerode (DE); Berg, Klaus-Jürgen Dr., 06130 Halle (DE); Mogalle, Dieter, 06130 Halle (DE); Müller, Andreas, 06114 Halle (DE); Kürbitz, Steffen, 06120 Halle (DE)
(74) Vertreter: COHAUSZ DAWIDOWICZ HANNIG & SOZIEN

(56) Entgegenhaltungen:
- US-A- 3 483 385
- US-A- 4 323 785

## Beschreibung

Die Erfindung betrifft ein Verfahren zur Identifizierung von Zinn- und Feuerseite bei Floatgläsern, insbesondere während eines automatisierten Fertigungsverfahrens, bei dem eine die Zinn- und Feuerseite unterscheidende optische Eigenschaft des Floatglases messtechnisch an einer der beiden Seiten erfasst wird und ein daraus resultierender Messwert mit einem vorgegebenen Vergleichswert verglichen wird, wobei aus dem Ergebnis des Vergleiches die Zinn- und Feuerseite des Floatglases bestimmt werden.

Floatglas bzw. Flachglas wird während seines Herstellungsverfahrens als Glasschmelze auf ein Zinnbad aufgegossen, so dass Floatglas herstellungsbedingt an seinen beiden Oberflächen eine unterschiedliche chemische Zusammensetzung aufweist. Hierbei ist insbesondere der Gehalt an Zinnionen an derjenigen Oberfläche, die bei der Herstellung Kontakt mit dem Zinnbad hatte (Zinnseite), wesentlich größer als an der sogenannten Feuerseite bzw. Atmosphärenseite.

Diese Unterschiede bei Floatglas sind visuell mit dem menschlichen Auge nicht feststellbar, führen jedoch zu unterschiedlichen Eigenschaften und unterschiedlichem Verhalten des Floatglases bei vielen Bearbeitungs- und Veredelungsprozessen.

Beispielsweise sind Rissbildung und Benetzbarkeit sowie das Verhalten beim Aufbringen von Beschichtungen und beim lonenaustausch sowie auch bei der Bauschlussreinigung von Einscheibensicherheitsglas unterschiedlich, je nachdem, ob sie an der Zinn- oder Feuerseite von Floatglas untersucht werden.

Aufgrund der unterschiedlichen Eigenschaften der Feuer- bzw. Zinnseite von Floatglas ist es dementsprechend erforderlich, die jeweiligen Seiten zu identifizieren bzw. von einander zu unterscheiden, um insbesondere bei automatisierten Herstellungsverfahren, bei denen Floatglas hergestellt und/oder weiter verarbeitet wird, eine optimale Qualitätssicherung zu erreichen.

Zur Unterscheidung der beiden Seiten sind derzeit im Stand der Technik im Wesentlichen zwei Methoden bekannt. Die eine Methode beruht hierbei auf einer nasschemischen Untersuchung, bei dem sich unter einem Tropfen von Flusssäure, in welchem Silbernitrat gelöst ist, auf der Zinnseite eine Schwarzfärbung entwickelt, die visuell mit dem Auge von einem Betrachter beobachtbar ist. Die andere Methode beruht darauf, die Glasseiten mit ultraviolettem Licht zu beleuchten, wobei mit dem Auge eines Betrachters visuell auf der Zinnseite eine Fluoreszenzerscheinung feststellbar ist.

Beide Vorgehensweisen haben den Nachteil, dass die Methoden im Wesentlichen manuell appliziert werden und das Ergebnis von der subjektiven Wahrnehmung des Betrachters abhängt. Darüber hinaus ist die nasschemische Methode als umständlich und materialaufwendig einzustufen.

Ein automatisiertes jedoch gegen Umgebungslicht empfindliches Verfahren zur Auswertung einer Fluoreszenzlichterscheinung ist beispielsweise aus der Veröffentlichung US 4,323,785 bekannt.

Aufgabe der Erfindung ist es, ein Verfahren bereit zu stellen, mit dem ein objektives Maß erhältlich ist, um die Zinn- und Feuerseite von Floatglas zu identifizieren bzw. von einander zu unterscheiden, wobei das Verfahren auch in ein automatisiertes Fertigungsverfahren zur Herstellung und/oder Verarbeitung von Floatglas eingebunden werden kann.

Die Aufgabe wird erfindungsgemäß dadurch gelöst, dass bei dem Verfahren mittels einer UV-Lichtquelle, deren ausgestrahltes Licht eine Wellenlänge kurzweilig von der UV-Absorptionskante des ausgemessenen Glases aufweist, die Oberfläche des Floatglases beleuchtet wird und mittels eines UV-empfndlichen Detektors als Messwert die Intensität des von der Floatglasoberfläche reflektierten UV-Lichtes bestimmt wird.

Unter einer die Zinn- und Feuerseite unterscheidenden optischen Eigenschaft wird im Sinne der Erfindung sowohl verstanden, dass die eine Seite eine optische Eigenschaft aufweisen kann, welche die andere Seite nicht aufweist, als auch, dass eine optische Eigenschaft auf/an der einen Seite stärker ausgeprägt ist als auf/an der anderen Seite.

Unter der messtechnischen Erfassung einer optischen Eigenschaft wird im Sinne der Erfindung verstanden, dass eine Messgröße bzw. ein Messwert erfasst wird, der das Vorhandensein oder die Stärke/Größe bzw. Ausprägung einer optischen Eigenschaft repräsentiert. Die Messgröße bzw. der Messwert einer solchen optischen Eigenschaft wird also davon abhängen, ob die messtechnische Erfassung dieser Messgröße bzw. des Messwertes aus der Richtung bzw. an der einen oder der anderen Seite durchgeführt wird.

Ein derartiges Verfahren kann dementsprechend durchgeführt werden mittels einer Vorrichtung, die eine Messvorrichtung umfasst, mittels der eine die Zinn- und Feuerseite unterscheidende optische Eigenschaft des Floatglases aus der Richtung oder an einer der beiden Seiten erfassbar ist und in der ein aus dieser Messung resultierender Messwert mit einem vorgegebenen Vergleichswert vergleichbar ist, um sodann aus diesem Vergleich auf die Zinn- bzw. Feuerseite des Floatglases zu schließen.

Durch die messtechnische Erfassung, insbesondere mit einer hierfür vorgesehenen Messvorrichtung, weist das Verfahren die Vorteile auf, dass das Ergebnis aufgrund eines objektiven, insbesondere messtechnischen bzw. maschinellen Vergleichs vorliegt, so dass fehlerhafte Einschätzungen durch die subjektive Beobachtung einer Person ausgeschlossen sind.

Darüber hinaus kann mittels einer messtechnischen Erfassung einer optischen Eigenschaft des Floatglases eine Einbindung dieser Messung in automatische Fertigungsprozesse vorgenommen werden, die die Möglichkeit gibt, während eines Herstellungs-, Fertigungs-, Produktions- oder Verarbeitungsprozesses fortwährend die richtige Orientierung von Floatglas zu überprüfen.

Bei dem Vergleich des Messwertes, der von einer ausgemessenen optischen Eigenschaft des Floatglases abhängt, mit einem Vergleichswert, hängt es hierbei letztendlich von der Art der gemessenen Eigenschaft ab, welches Ergebnis der Vergleich liefert. Beispielsweise kann bei einem Vergleich mit einem Vergleichswert, bei dem der Messwert geringer ausfällt als der Vergleichswert darauf geschlossen werden, ob die jeweilige Messung aus der Richtung bzw. an der Zinn- bzw. der Feuerseite des Glases vorgenommen wurde, so dass hierdurch eindeutig die Lage der Zinn- bzw. Feuerseite des Floatglases bestimmt werden kann, beispielsweise um die richtige Orientierung bei einer automatischen Verarbeitung des Floatglases zu gewährleisten. Ebenso kann es natürlich vorgesehen sein, dass der Vergleich, beispielsweise bei einer Überprüfung einer anderen optischen Eigenschaft umgekehrt ausfällt.

Der Vergleichswert kann grundsätzlich vorgegeben sein und einen statischen, sich nicht ändernden Wert bilden. Da es jedoch vorkommen kann, dass sich die optischen Eigenschaften von Glas, je nachdem aus welcher Fertigungscharge das Glas stammt, ändern, kann ein Vergleich mit einem statischen Vergleichswert zu ungenauen oder falschen Ergebnissen führen, so dass es in einer bevorzugten Weiterbildung vorgesehen sein kann, dass der Vergleichswert bestimmt wird aus der messtechnischen Erfassung derselben optischen Eigenschaft aus der Richtung bzw. an der anderen Seite des Floatglases.

Durch diese Art und Weise, bei einer Messung vorzugehen, wird sicher gestellt, dass unabhängig von der absoluten Größe des Messwertes, welcher der Messung einer optischen Eigenschaft des Floatglases entstammt, ein relativer Vergleich vorgenommen wird, bei dem die Auswertung aufgrund der Tatsache, dass Zinn- und Feuerseite des Floatglases unterschiedliche optische Eigenschaften aufweisen, eine sichere Unterscheidbarkeit gewährleistet.

So wird dementsprechend zur Identifizierung von Zinn- und Feuerseite bei dem bevorzugten Verfahren ein- und dieselbe Messung einer optischen Eigenschaft sowohl von/an der einen als auch von/an der anderen Seite des Floatglases durchgeführt, wobei das Resultat der Messung von/an der einen Seite den Messwert und das Resultat der Messung von/an der anderen Seite den Vergleichswert im Sinne des erfindungsgemäßen Verfahrens bildet.

Zur Durchführung des Verfahrens in einer Vorrichtung kann es dementsprechend vorgesehen sein, dass diese Vorrichtung entweder eine Messvorrichtung aufweist, die nacheinander Messungen von/an der einen und dann von/an der anderen Seite durchführt oder aber dass die Vorrichtung zwei unabhängige Messvorrichtungen aufweist, mittels denen gleichzeitig der Messwert und der Vergleichswert im Sinne der Erfindung bestimmt werden können.

Erfindungsgemäß ist es vorgesehen, dass der Messwert und/oder der Vergleichswert einer optischen Eigenschaft von der Intensität eines aufgrund eines eingestrahlten Lichtes reflektierten Lichtes abhängt, insbesondere wenn das Licht nur an der in Einstrahlungsrichtung ersten Oberfläche des Floatglases reflektiert wird.

Diesem erfindungsgemäßen Vorgehen liegt die Überlegung zugrunde, dass Floatglas aufgrund seiner unterschiedlich chemischen Eigenschaften an der Zinn- bzw. der Feuerseite ebenso unterschiedliche Brechungsindizes aufweist, so dass durch eine Erfassung von Messwerten, die aufgrund unterschiedlicher Brechungsindizes der beiden Seiten von einander abweichen, ebenso die Möglichkeit besteht, die Zinn- von der Feuerseite bei Floatgläsem zu unterscheiden.

In einer Vorrichtung zur Durchführung des Verfahrens ist es dementsprechend vorgesehen, dass eine Lichtquelle mittels einer ausgewählten Wellenlänge die Oberfläche eines Floatglases beleuchtet und die Intensität des reflektierten Lichtes beobachtet wird. Hierbei wird eine Lichtquelle gewählt, deren ausgestrahltes Licht eine Wellenlänge kurzwellig von der UV-Absorptionskante des ausgemessenen Glases aufweist, da dann in besonders bevorzugter Messanordnung das eingestrahlte Licht nur von der in Einstrahlungsrichtung ersten Oberfläche des Floatglases reflektiert wird, das Licht jedoch aufgrund der starken Absorption innerhalb des Glases nicht von der zweiten auf der anderen Seite liegenden Oberfläche reflektiert werden kann, da diese Oberfläche praktisch von dem eingestrahlten Licht nicht mehr erreicht wird. Dementsprechend werden bevorzugt Anordnungen zur Durchführung des Verfahrens eingesetzt, bei denen eine möglichst geringe Transmission des eingestrahlten Lichtes auftritt, wobei bevorzugt die Transmission kleiner 10%, bevorzugt kleiner 4% und besonders bevorzugt kleiner 1 %, gewählt wird.

Eine Vorrichtung zur Durchführung dieses Verfahrens weist dementsprechend eine Messvorrichtung auf, mittels der ein Messwert und/oder Vergleichswert bestimmbar ist, der von der Intensität des von einer Floatglasoberfläche reflektierten Lichtes abhängt, wobei eine UV-Lichtquelle sowie ein UVempfindlicher Detektor zur Messung der reflektierten Lichtintensität, wie beispielsweise eine Fotodiode, eingesetzt wird. Hier kann als Lichtquelle in besonders bevorzugter Auswahl eine UV-Leuchtstoffröhre mit einem Emissionsmaximum von etwa 253 Nanometer ausgewählt werden. Der Detektor zur Messung einer Lichtintensität des reflektierten Lichtes weist bevorzugt einen empfindlichen Spektralbereich von 230 - 530 Nanometer auf, wie er bei siliziumbasierten Fotodioden zu finden ist.

Wird mittels einer derartigen Vorrichtung das genannte erfindungsgemäße Verfahren durchgeführt, so kann aufgrund der unterschiedlichen Brechungsindizes von Zinnseite und Feuerseite ein sich dadurch ergebendes unterschiedliches Reflexionsverhalten der beiden Seiten festgestellt werden. Im Wellenlängenbereich kurzwellig von der Absorptionskante, wo die Absorption so stark ist, dass nur an der Vorderseite reflektiertes Licht vom Detektor registriert wird, wird dementsprechend an der Zinnseite des untersuchten Glases eine höhere Reflexion festgestellt als bei der Erfassung eines Vergleichsreflexionswertes von der Feuerseite.

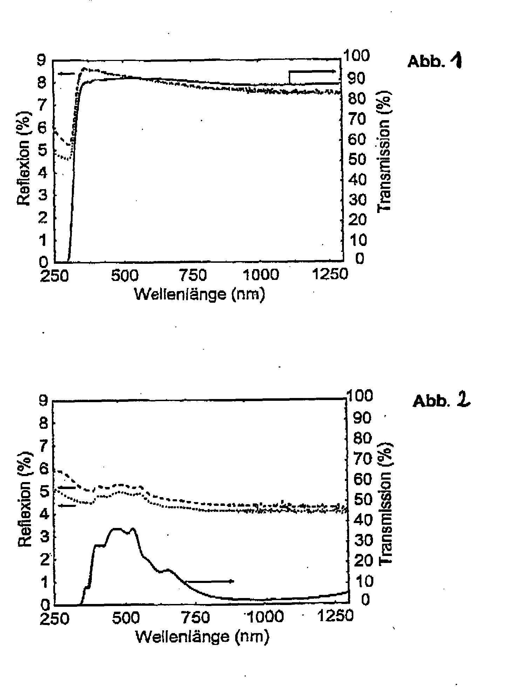

Die nachfolgenden Abbildungen 1 und 2 zeigen Messergebnisse nach dem erfindungsgemäßen Verfahren. Es zeigen:
- Abbildung 1:: die Transmission und Reflexion in Abhängigkeit von der Wellenlänge, wobei bei der Reflexionsmessung einmal die Zinnseite und einmal die Feuerseite zur Strahlungsquelle orientiert war;
- Abbildung 2:: die Transmission und Reflexion in Abhängigkeit von der Wellenlänge bei einem Floatglas mit "1,8 Massenprozent Eisenoxidgehalt, wobei bei der Reflexionsmessung einmal die Zinnseite und einmal die Feuerseite zur Strahlungsquelle orientiert war.

Die Abbildung 1 zeigt den Einsatz des erfindungsgemäßen Verfahrens an einer Floatglasprobe mit einer Dicke von 1,2 mm. Dargestellt ist in der Abbildung 1, bezogen auf die linke Ordinate, die Reflexion bei etwa senkrechtem Lichteinfall sowie in der rechten Ordinate die Transmission jeweils als Funktion der Wellenlänge. Es ist hier erkennbar, dass im Wellenlängenbereich mit einer Transmission unterhalb von 1% an der Zinnseite eine deutlich höhere Reflexion zu messen ist als an der Feuerseite. Hierbei ist die Reflexionsmessung an der Zinnseite durch eine gestrichelte Kurve und die Messung an der Feuerseite durch eine punktierte Kurve in der Abbildung 1 wiedergegeben. Es ist weiterhin feststellbar, dass in dem nahezu absorptionsfreien Spektralbereich, bei dem eine hohe Transmission vorliegt, kein signifikanter Unterschied bei den Reflexionsmessungen erkennbar ist.

Dementsprechend wird auch hier das erfindungsgemäße Verfahren bei der Reflexionsmessung bevorzugt in einem Wellenlängenbereich eingesetzt, wo die Transmission unterhalb von 10%, bevorzugt kleiner 5% und besonders bevorzugt kleiner 1%, liegt. Dieser Grenzbereich geringer Transmission wird mit eingestrahltem UV-Licht erreicht, welches kurzweilig von der Absorptionskante des verwendeten Glases liegt, wobei hier erkennbar ist, dass Reflexionsgradunterschiede im Bereich von 1% messtechnisch erfassbar sind. Durch einen Vergleich von Messwerten, die von dem Reflexionsverhalten des eingestrahlten Lichtes abhängig sind, kann somit wiederum eindeutig die Zinnseite von der Feuerseite unterschieden werden.

Die Abbildung 2 zeigt im Wesentlichen dieselbe Messung bei einem nunmehr 4 mm dicken Floatglas mit einem etwa 1,8 massenprozentigem Eisenoxidgehalt. Hier ist wiederum die Reflexion wie auch die Transmission in Abhängigkeit von der Wellenlänge dargestellt, wobei hier erkennbar ist, dass die Transmission im gesamten verwendeten Wellenlängenbereich unterhalb von etwa 3,5% liegt.

Dementsprechend ist aufgrund der geringen Transmission eine Unterscheidung der Zinn- und Feuerglasseite über den gesamten Wellenlängenbereich möglich, da sich wie hier deutlich erkennbar ist, über den gesamten Bereich eine signifikante Unterscheidung bei der Reflektion ergibt, die insbesondere im kurzwelligen Wellenlängenbereich besonders ausgeprägt ist und Reflexionsgradunterschiede im Bereich von 1% ergibt.

In dem aufgrund des Eisenoxidgehaltes grün gefärbten Floatglas ist somit die Transmission im gesamten vermessen Spektralbereich so gering, dass die an der vorderen Glasoberfläche reflektierte Strahlung die Messergebnisse dominiert und sodann die Reflektion über den gesamten Wellenlängenbereich an der Zinnseite, die durch die gestrichelte Kurve dargestellt ist, höher ist als an der Feuerseite, die durch die punktierte Kurve gezeigt wird. Hierbei ist es auffällig, dass im Bereich der höchsten Transmission im Wellenlängenbereich um 500 Nanometer die Strukturen der Transmissionskurve in den Reflektionsmessungen wiederzufinden sind.

Unabhängig von der Möglichkeit, an den gefärbten Gläsern eine Identifizierung von Zinn- und Feuerseite durch eine Reflektionsmessung bei beliebigen Wellenlängen vornehmen zu können, ist es erfindungsgemäß bevorzugt, zur Vermessung Wellenlängen in einem Bereich unter 300 Nanometer einzusetzen. Beispielsweise kann in einer Vorrichtung zur Durchführung des erfindungsgemäßen Verfahrens eine UV-Leuchtstofflampe mit einem Emissionsmaximum bei etwa 253 Nanometer eingesetzt werden, wobei als Empfänger bzw. Detektor für das reflektierte Licht eine Siliziumfotodiode mit einem empfindlichen Spektralbereich von etwa 230 - 350 Nanometer zum Einsatz kommen kann.

Da die Erfassung der Messwerte automatisch durch entsprechende Messvorrichtungen durchgeführt werden kann, eignet sich das erfindungsgemäße Verfahren sowie die Vorrichtung hervorragend zum Einsatz in Herstellungs- und Produktionsverfahren bei der Weiterverarbeitung oder auch bei der Herstellung von Floatglas.

## Patentansprüche

1. Verfahren zur Identifizierung von Zinn- und Feuerseite bei Floatgläsern, bei dem eine die Zinn- und Feuerseite unterscheidende optische Eigenschaft des Floatglases messtechnisch an einer der beiden Seiten erfasst wird und ein daraus resultierender Messwert mit einem vorgegebenen Vergleichswert verglichen wird, wobei aus dem Ergebnis des Vergleiches die Zinn- und Feuerseite des Floatglases bestimmt werden, **dadurch gekennzeichnet, dass** mittels einer UV-Lichtquelle, deren ausgestrahltes Licht eine Wellenlänge kurzwellig von der UV-Absorptionskante des ausgemessenen Glases aufweist, die Oberfläche des Floatglases beleuchtet wird und mittels eines UVempfindlichen Detektors als Messwert die Intensität des von der Floatglasoberfläche reflektierten UV-Lichtes bestimmt wird.

2. Verfahren nach Anspruch 1, **dadurch gekennzeichnet, dass** der Vergleichswert bestimmt wird aus der messtechnischen Erfassung derselben optischen Eigenschaft an der anderen Seite des Floatglases.

3. Verfahren nach einem der vorherigen Ansprüche, **dadurch gekennzeichnet, dass** das UV-Licht nur an der in Einstrahlungsrichtung ersten Oberfläche des Floatglases reflektiert wird.

4. Verfahren nach einem der vorherigen Ansprüche, **dadurch gekennzeichnet dass** UV-Licht einer Wellenlänge gewählt wird, bei der die Transmission unterhalb von 4 %, insbesondere unterhalb von 1 % liegt.

## Claims

1. Process for the identification of the tin side and the firing side of float glass, in which an optical property, differentiating the tin side and the firing side, is assessed by measuring techniques on one of the two sides and a resulting measured value is compared with a predetermined reference value, whereby the tin side and the firing side of float glass are determined from the result of the comparison, **characterised in that** the surface of the float glass is irradiated by means of a UV light source, the emitted light of which has a wavelength, which is a short wavelength from the UV absorption edge of the measured glass, and the intensity of the UV light reflected from the float glass surface is determined as the measured value by means of a UV sensitive detector.

2. Process according to claim 1, **characterised in that** the reference value is determined from the assessment of the same optical property on the other side of the float glass by measuring techniques.

3. Process according to one of the previous claims, **characterised in that** the UV light is reflected only on the first surface of the float glass in the direction of irradiation.

4. Process according to one of the previous claims, **characterised in that** UV light is selected with a wavelength, with which transmission is below 4%, particularly below 1 %.

## Revendications

1. Procédé pour l'identification de la face côté étain et de la face côté feu des verres flottés, où une propriété optique du verre flotté différenciant la face côté étain et la face côté feu est saisie par technique de mesure sur une des deux faces et où une valeur de mesure résultante est comparée à une valeur comparative définie, où la face côté étain et la face côté feu sont déterminées à partir du résultat de la comparaison, **caractérisé en ce que** la surface du verre flotté est éclairée au moyen d'une source de lumière UV dont la lumière irradiée a une longueur d'onde du côté des longueurs d'ondes courtes de la limite d'absorption UV du verre mesuré, et **en ce que** l'intensité de la lumière UV réfléchie par la surface du verre flotté est déterminée comme valeur de mesure au moyen d'un détecteur sensible aux UV.

2. Procédé selon la revendication 1, **caractérisé en ce que** la valeur comparative est déterminée sur la base de la saisie par technique de mesure de la même propriété optique sur l'autre face du verre flotté.

3. Procédé selon l'une des revendications précédentes, **caractérisé en ce que** la lumière UV n'est réfléchie que sur la première surface du verre flotté dans la direction de rayonnement.

4. Procédé selon l'une des revendications précédentes, **caractérisé en ce que** la lumière UV est choisie avec une longueur d'onde pour laquelle la transmission est inférieure à 4 %, en particulier inférieure à 1 %.
